(19) Europäisches Patentamt
European Patent Office
Office européen des brevets

(11) **EP 1 216 590 B1**

(12) # EUROPEAN PATENT SPECIFICATION

(45) Date of publication and mention
of the grant of the patent:
**09.12.2009 Bulletin 2009/50**

(51) Int Cl.:
**H04W 4/00** (2009.01)

(21) Application number: **00962567.4**

(86) International application number:
**PCT/FI2000/000841**

(22) Date of filing: **29.09.2000**

(87) International publication number:
**WO 2001/024559 (05.04.2001 Gazette 2001/14)**

(54) **METHOD FOR DETERMINING A LOCATION OF A MOBILE PHONE**

VERFAHREN ZUR BESTIMMUNG DES AUFENTHALTSORT EINES MOBILEN TELEFONS

PROCEDE DE DETERMINATION DE LA POSITION D'UN TELEPHONE MOBILE

(84) Designated Contracting States:
**AT BE CH CY DE DK ES FI FR GB GR IE IT LI LU
MC NL PT SE**

(30) Priority: **29.09.1999 FI 992094**

(43) Date of publication of application:
**26.06.2002 Bulletin 2002/26**

(73) Proprietor: **Elisa Oyj
00520 Helsinki (FI)**

(72) Inventors:
• **SALMINEN, Mikko
FIN-02700 Kauniainen (FI)**

• **KURKIJÄRVI, Timo
FIN-02150 Espoo (FI)**
• **SIPPOLA, Timo
FIN-01450 Vantaa (FI)**
• **PIRINEN, Juha
FIN-00420 Helsinki (FI)**

(74) Representative: **Tiilikainen, Jarkko Tapio
Seppo Laine Oy
Itämerenkatu 3 B
00180 Helsinki (FI)**

(56) References cited:
WO-A1-00/60886          WO-A1-99/11078
DE-A1- 19 621 424       US-A- 5 732 354
US-A- 5 901 358         US-A- 5 948 041

**Description**

The present invention relates to a service-request message, according to the preamble to Claim 1, to be sent from a terminal device of a mobile telephone network to a server connected to the mobile telephone network.

The invention also relates to a method, according to the preamble to Claim 7, for determining the location of a terminal device of a mobile telephone network, in connection with a service using location data.

Such service-request messages and methods are used to order and provide services dependent on the location of the terminal device. These services can be, for example, services in which an enquiry is made for information relating to a certain geographical area, such as contact details or addresses of service stations, restaurants, etc. in the area.

According to the state of the art, the location of a mobile phone connection can be determined using location data given by the mobile phone network, i.e. cell-identification data. In this case, the operator has known in which cell area of the mobile phone network the connection in question is at any moment. If more a precise location than the cell data is desired, a mobile phone has been able to be located more precisely mainly by combining data given by the three mobile phone cells closest to the mobile phone. The result is then a location area for the mobile phone, formed by the intersection of mobile phone cell-coverage areas. Patent publication US 5,926,765 discloses one known solution.

Location data can be exploited when providing services depending on location. In such a service, the data required to determine location can be advantageously placed in a single message, which also contains information on the service ordered. The location of the terminal device is calculated from the data sent, the location data being taken into account in the control of the service, or the response sent to the customer, or when otherwise defining the service product or its properties. Services dependent on the location of the terminal device are disclosed in application publications WO 99111078, WO 98/57506, and WO 98/19479.

DE-A1-19621424 discloses a system for determining a position of a mobile unit. The system is based on GPS positioning and thus the mobile unit includes a mobile computer (PC + cellular mobile terminal), a panel input unit, a navigation system (GPS), a mobile memory unit, a display and a GPS antenna. The system needs also to have an antenna, a transmitter, a stationary computer and a stationary memory unit Therefore, the system is complex and expensive and suited for special applications only.

US-A-5901358 describes a method for detecting the position of a remote station with the aid of a wireless communication network. The method produces network measurement data with extra made handovers and uses the measurement data for positioning. This requires requesting extra handovers even when they are not needed for normal standard functions in the network.

The precision of known services is not all that could be hoped for. Users of known services particularly encounter problems when moving at a relatively high speed, for example, when sitting in a moving car. When a person sitting in a car uses a location-dependent services, the problem arises, that, if the service is implemented very locally, the person ordering the service may, at the moment it is sent, be already quite far from the area according to which the service is provided. This means that the benefit of the service is small or non-existent. On the other hand, if the service is provided to cover a very large area, the number of targets hit may become too large and the service too complicated. This reduces the benefit of the service particularly to moving users, as a great deal of time is needed to use a complex service. During this time, the user may have moved outside the service area.

The use of a complex service is especially dangerous, if the user of the service is driving a moving car. In this connection, however, we wish to emphasise that a mobile phone should never be used while driving a car, as this can endanger traffic. Thus, car drivers may not personally use the services disclosed in the publication.

The invention is intended to improve location-dependent services, especially for moving users.

The invention is based on the fact that the service is formed by determining not only the location of the mobile phone, but also at least its approximate direction of movement, the service to be provided being delimited by both location and direction of movement.

The invention is particularly applicable in connection with mobile phone networks and their terminal devices. One such system is the GSM system. The invention is especially suitable for use in connection with WAP-based services.

More specifically, the service request according to the invention is characterized by what is stated in the characterising section of Claim 1. The method according to the invention is, in turn, characterized by what is stated in the characterizing section of Claim 7.

Considerable advantages are gained with the aid of the invention.

The invention can be used to significantly improve the targeting of a service offered, especially in the case of moving users.

The invention also relates to a new method for determining location, which can be used when producing services according to the invention. This method significantly increases accuracy when determining locations.

As, in the invention, the terminal device of the mobile phone network sends the data used to calculate the location data, along with the order for the service, and in a preferred embodiment even in the same message, the location data are transmitted automatically to the service and are immediately available to the service.

In the following, the invention is examined with the aid of examples and with reference to the accompanying drawings.

Figure 1 shows one example of the application of one method according to the invention.

Figure 2 shows a second example of the application of one method according to the invention.

Figure 3 shows a third example of the application of one method according to the invention.

Figure 4 shows one system that can be used in connection with the invention.

Figure 5 shows the method to be performed in the terminal device, according to one embodiment of the invention.

Figure 6 shows one situation relating to a service permitted by the invention.

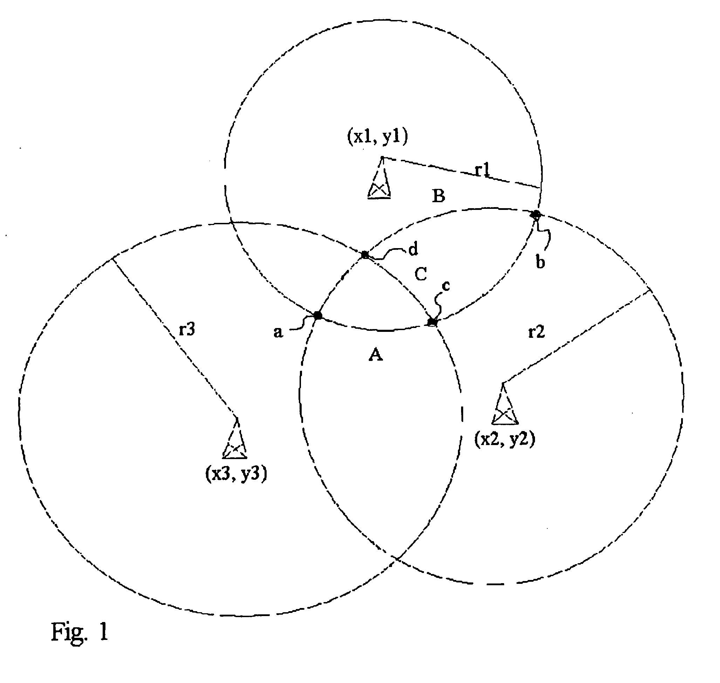

In the method shown in Figures 1-3, the mobile phone network's terminal device measures the strength of the signal sent by each mobile phone network base station with which it is in contact. This measurement takes place when the terminal device is used to order a certain service. This can mean, e.g., sending a specific type of service request message. The terminal device then includes, in the service-request message, the data needed to identify the service and the parameters measured by the terminal device, which allow the service ordered to determine the terminal device's location.

In this case, the values depicting the strength of the mobile phone network base stations' signals measured by the terminal device and the corresponding base stations' identifying data can be sent, so the service must know the base stations' co-ordinates. This is arranged by the service retrieving the identified base stations' location data from a location server, over a telecommunications link. This embodiment has the advantage that when making a service request, the terminal device need not know the base stations' location, but only their IDs. In an alternative embodiment, when sending a service request, the terminal device sends the base station location data corresponding to the strength values, allowing the service ordered to calculate the location, without a separate base station location database. In this embodiment, the terminal device receives the base stations' location data from the base station over the communications link used between the terminal device and the base station.

The system of Figure 4 comprises a mobile phone 1, a location server 2, and an application server 3. Mobile phone 1 contains devices to measure the signals of base stations and transmit the measurements over a mobile phone network to location server 2, e.g., contained in a text-form service-request message. Location server 2 contains devices to receive messages sent by mobile phone 1 and to calculate the location and direction of movement of mobile phone 1 on the basis of a received message. Further, location server 2 contains device to send the calculated location and direction of movement to application server 3. Application server 3 contains devices to receive and interpret the location and direction of movement data sent by location server 2 and devices to provide a service dependent on the location and direction of movement.

When using the system of Figure 4, the user of mobile phone 1 orders a service affected by her or his location and/or direction of movement. The user of mobile phone 1 then uses the interface of mobile phone 1 to give a service command, from which the mobile phone makes the measurements and forms a service-request message. Mobile phone 1 sends the service-request message to location server 2 (stage 11). Location server 2 calculates the location and direction of movement of mobile phone 1 and sends the data to application server 3 (stage 12). Application server 3 produces the location-dependent service and provides it to mobile phone 1 (stage 13).

Alternatively, the service-request message can also be sent from mobile phone 1 directly to application server 3, which would then send the parameters it received to location server 2 to determine the location and direction of movement. Location server 2 would return a message to application server 3, stating the location and direction of movement of mobile phone 1. Next, application server 3 could deliver the service, as in the example of Figure 4. The location and application server functions can also be performed in a combined server.

The method according to Figure 5 can take place in mobile phone 1. The stages of the method of Figure 5 are next described according to the blocks shown in the figure:

21) The user uses the mobile phone's interface to select a service exploiting location and direction of movement data. The mobile phone then receives a command in the form <option><send location and direction>. If direction of movement is not needed the command can be in the form <option><send location>. From the command, the mobile phone runs a program related to the service, which can be stored in the permanent memory of the phone, or in, e.g., a connection card, like a SIM card. In principle, the program can also be downloaded over the tele-network for the mobile phone's use. In any event, the mobile phone initiates the program performing the method of Figure 5.

22) The mobile phone measures the first parameters to determine location. The mobile phone records these parameters in its memory, generally a temporary memory.

23) The mobile phone waits for a change of cell. Once the mobile phone detects a change in the group of mobile-phone network base-station cells it is in contact with, the program run proceeds to block 24. A cell-change can be detected, e.g., if the mobile phone is in contact with at least one base-station cell that it was not in contact with when it measured the first recorded parameters.

24) The mobile phone measures second parameters to determine location. The phone records these parameters in its memory, generally a temporary memory.

25) The mobile phone forms a service-request message, containing the identification data of the service ordered and the first and second measured parameters.

26) The mobile phone sends the message it has formed to the address defined in the service-request message, e.g., to the location server or application server.

27) The mobile phone waits for a response to the service request. The program run can then be terminated, unless the service operates continuously.

The method can also be implemented using the mobile phone network base station and not the mobile phone to make the measurements. A method like that of, e.g., Figure 5, can then be carried out in the mobile phone network. The method can also be implemented by making the actual measurements in the mobile phone, but sending them to the mobile phone network for saving and processing, when required to carry out a method like that disclosed above.
The method can also be adapted by not waiting for a cell-change between parameter measurements, but measuring the parameters at intervals of, e.g. two seconds. This is because waiting for a cell-change can cause problems, if the phone is stationary. If the cell has not changed between measurements, the service can be provided without direction of movement data. Another alternative is for the program to always save the previous cell's data when the cell changes. As the direction of movement parameter is then always available, there is no need to wait for the phone to move after making a service request.
A mobile phone's direction of movement can be determined in the location server by a simple calculation using the locations determined from the first and second parameters. The direction of movement can then be expressed, e.g., as a vector. The direction can also be determined more approximately for a service application. The directions can then be divided into classes with the desired precision. The classes can be, e.g., "north", "east", "south" and "west". If desired, intermediate directions can also be included. Of course, there can be more classes, or only two or three.
The location of the mobile phone is preferably defined as the location calculated from the second group of parameters, as this definition is more up-to-date.
The location of the mobile phone can also be determined by taking into account the times of measuring the first and second parameters and the time the location message was transmitted to the service application and defining the location as a third point estimated from this data. The third point is then calculated by, e.g., adding to the co-ordinates of the second location point the calculated direction of movement vector, the length of which is determined from the ratios of the times between the first and second and the second and estimated third times. Thus, the location of a rapidly moving mobile phone can be approximated. In such an embodiment, the service-request message must naturally also include the times of determining the measurement data.
The mobile phone's location and direction of movement are sent in an agreed form to the application server providing the actual location-dependent service. The application server can then provide the service on the basis of the mobile phone's location and direction of movement. The service can be, e.g., a service giving details of nearby service stations, restaurants, or pizzerias, or a weather forecast or traffic conditions service. The application server can use the direction of movement or the direction class defined from it to eliminate data relating to locations already passed by the mobile phone from the group of potential data to be sent to the phone.
One possible way to perform this selection is the above direction of movement classification. If the direction of movement of the mobile phone is, e.g., in the class "north-east", all points located between north and east of the location of the mobile phone can be selected, for the service to be provided, from the group of points at a relevant distance. Correspondingly, if the mobile phone is moving to the south, all service points between the south-east and south-west can be selected. The selection direction and its approximateness can of course be chosen freely to differ from the above example. E.g., if the direction class is "south", in some applications services can only be selected if their location point relative to the mobile phone is also in the class "south". In another application, however, if the mobile phone's direction class is "south" all services with locations point in the classes "east", "south-east", "south", "south-west", and "west" relative to phone's location can be selected.
Another possible way to select relevant services is calculation using vectors. A certain distance value and angle value can then be defined for each service that can be ordered, the service points remaining within their areas being selected as a service to be sent to the mobile phone. Of course, the selection can also be limited to a maximum number of desired service points, when the most relevant service points are selected, up to the chosen number. When using vector calculation, location vectors for the service points can be calculated in relation to a defined location point of the mobile phone. Those service points are selected for the service, for which the length of location vector is less than the maximum defined for the service and the direction of the location vectors of which deviates from the direction of movement vector defined for the mobile phone, no more than a predefined maximum deviation.

Figure 6 uses an example to illustrate the operation of the service and its benefits. In the figure's example, the user of mobile telephone 1 is in a car, moving along road R. The user of mobile phone 1 desires information on nearby service stations and uses the mobile phone to send a service request to the service providing service-station location and contact information. Mobile phone 1 then measures the parameters at a first point (1') and a second point (1") and sends them, along with the service-request message, as in the examples described above. In the location-point service, point 1" is calculated as the location of mobile phone 1. The direction of movement vector V is also calculated. Service stations located nearby are now retrieved from the database, according to the service's definitions. This can be carried out, e.g., by service area or by calculating the distances. In this example, service stations 4, 5, 6, 7, 8, and 9 are located in the neighbourhood. In this example, the service is, however, set to select only those nearby service stations that are located in the sector bounded by straight lines L1 and L2. This sector may have been selected as, e.g., direction class "east", or it may have been formed by calculation from the direction of movement vector V.

In the service of the example of Figure 6, only service stations 4, 6, and 8 are selected for the service to be sent to the mobile phone. This selection brings significant value added to the user of the service, as, in a service according to the state of the art, information would also have been sent on service station 5, which has already been passed and on service stations 7 and 9, which are on side roads.

If the service is implemented on a WAP basis or using a technique permitting similar operation, a WAP page containing links to service stations 4, 6, and 8 can be added to the service sent to mobile phone 1 in the example of Figure 6. The links could be named using the service-station names and could be used to give more information on a service station or form a communications contact with the service station.

In the following, the use of the service and the formation of service-request messages are illustrated with three examples. In the examples, user needs to find places close to him that can provide him a pizza. Thus he writes pizza to a short message on his mobile phone. Instead of sending it with normal *<option><send> or <select><send>* sequence, he sends it with *<option><send with location> or <select><send position>* sequence. What happens with this *<send with location>* sequence depends on what kind of phone he has and there are at the moment 3 alternatives:

**1. GPS**

If the user has a handset with built in GPS receiver, the handset will add the location coordinates in WGS-84 format at the end of the message typed in by the user. The user never sees this end part of the message, but it would look like this:

Pizza ;@1,N60.22.38.3,E023.06.29.0"

where " ;@" acts as a delimitter for further parsing, 1 describes that the rest of the message means location data in WGS-84 format. Note: There is a space before ; and after the command word that is added by the phone.

**2. Cell ID**

If the user has a normal GSM-handset, the handset will add the Cell ID at the end of the message typed in by the user. The user never sees this end part of the message, but it would look like this:

Pizza ;@2,29234

where " ;@" acts as a delimitter for further parsing, 2 describes that the rest of the message means Cell ID and decimal number after comma is the actual Cell ID of the serving cell. Note: There is a space before ; and after the command word that is added by the phone.

**3. Network measurement data**

If the user has a normal GSM-handset, the handset will add the several network related paramaters at the end of the message typed in by the user. The user never sees this end part of the message, but it would look like this:

Pizza
;@3,244,12,15,3004,3,105,00,66,231,12,70,345,53,75,516 ,26,80,765,33,92,766,77,95,15,3002

where " ;@" acts as a delimitter for further parsing, 3 describes that the rest of the message means location data consisting of several network related parameters. And the parameters are MCC (Mobile Country Code), MNC (Mobile Network Code), LAC (Location Area Code), CID (Cell Identification Number), TA (Timing Advance, if the value is more than 10 seconds old, the number will be preceeded ore replaced by *), BCCH1 (Channel number for 1st cell), BSIC1 (corresponding Colour code consisting of two digits, if it can not be opened, it is replaced by **), MS Rx I (corresponding reception level [dBm]), BCCH2 (Channel number for 2nd cell), BSIC2 (corresponding Colour code consisting of two digits, if it can not be opened, it is replaced by **), MS Rx 2 (corresponding reception level [dBm]), etc until BCCH7, BSIC7 and MS Rx 7, MSTXpwr (transmission power level, if power level adjusting is used, otherwise replaced by *) and finally old CID (i.e. 2 minutes old used for recognition of the direction). Note: There is a space before ; and after the command word that is added by the phone.

For the methods referred to above, the actual location of the terminal device can be determined using some known way to determine location. The location can also be determined using the entirely new method disclosed below.

**Location algorithm**

**1.0 Calculation of the radius**

An equation proportional to the signal strength can be used to estimate the distance of the terminal device from the base station, on the basis of the measured signal strength. In that case, the functions can be assumed to be linear, e.g., as follows:

- between -30 -> -60 dBm the angular coefficient is 4, i.e. a change of one dBm corresponds to an increase in radius of 4 m

- between -60 -> -100 dBm the angular coefficient is 8.75, i.e. a change of one dBm corresponds to an increase in radius of 8.75m

Using these angular coefficients, an equation can be formed and the constant required in the equation is defined, in a manner understood by one versed in the art, to be suitable for the system to be used.

**2.0 Two base stations and circles**

***2.1 1 & 2 Circles***

The circles

$$(x - x_1)^2 + (y - y_1)^2 = r_1^2$$
$$(x - x_2)^2 + (y - y_2)^2 = r_2^2 \quad ,$$

are formed around the detected base stations, with radii $r_i$ calculated from the dBm value as disclosed above, the location point $(x_i, y_i)$ of the base station being defined as the centre. This gives intersection points a and b in the example of Figure 1. The points are used to delimit, from the equations of the circles, arcs A and B lying between the intersection points. This gives the following equations for arcs A and B:

$$A \equiv (x - x_1)^2 + (y - y_1)^2 = r_1^2, \{x : a, b\}, \{y : a, b\}$$

$$B \equiv (x - x_2)^2 + (y - y_2)^2 = r_2^2, \{x : a, b\}, \{y : a, b\}$$

**3.0 Three base stations and circles**

If at least three base stations are detected, the following operations must also be carried out, in addition to the stages above:

***3.1 Arc A & Circle 3***

$$A$$
$$(x - x_3)^2 + (y - y_3)^2 = r_3^2,$$

which gives the intersection point c of arc A and the third circle.

Next, arc A is redefined:

The distances of intersection points a and b from the centre of circle 3 are measured, and, if the distance is found to be greater than radius $r_3$, the intersection point is accepted for the redefinition of the arc. Points outside circle 3 are rejected. This can be shown as an equation as follows:

$$\begin{aligned} s_a &= \sqrt{(x_3 - x_a)^2 + (y_3 - y_a)^2} \\ s_b &= \sqrt{(x_3 - x_b)^2 + (y_3 - y_b)^2} \end{aligned}, \text{ if } \begin{aligned} s_a \vee s_b &\leq r_3, ACCEPT \\ s_a \vee s_b &> r_3, REJECT \end{aligned}$$

This equation notation thus means that, in this application, the following operations are performed in a suitable sequence:

- The distances $S_i$ of the end points i' (here points a and b) of the arc being considered (here arc A), from the centre $(x_i, y_i)$ of circle i being dealt with, are calculated.

- Each distance $s_{i'}$ is compared in turn with the radius $r_i$ of the circle being dealt with.

- If the distance $s_{i'}$ being compared is smaller than or equal to radius $r_i$, the corresponding end point i' of the arc is accepted for the redefinition.

- If the distance $s_{i'}$ being compared is greater than radius $r_i$, the corresponding end point i' is rejected from further processing.

In the example of Figure 1, a meets the condition

$$\Rightarrow A \equiv (x - x_1)^2 + (y - y_1)^2 = r_1^2, \{x : a, c\}, \{y : a, c\}$$

***3.2 Arc B & Circle 3***

Continue, as in the previous example, for arc B.

$$B$$
$$(x - x_3)^2 + (y - y_3)^2 = r_3^2 \,,$$

which gives intersection point d.

Redefinition of B:

Measure the distances from the centre of circle 3 to intersection points a and b

$$\begin{matrix} s_a = \sqrt{(x_3 - x_a)^2 + (y_3 - y_a)^2} \\ s_b = \sqrt{(x_3 - x_b)^2 + (y_3 - y_b)^2} \end{matrix} \,, \text{if} \begin{matrix} s_a \vee s_b \le r_3, ACCEPT \\ s_a \vee s_b > r_3, REJECT \end{matrix}$$

In this case, it is obvious that a once again meets the set condition, and intersection point d is accepted for the redefinition of arc B. Intersection point d is then substituted in place of the end point of arc B, further from the centre of circle 3. The following equation is then obtained for arc B:

$$\Rightarrow B \equiv (x - x_2)^2 + (y - y_2)^2 = r_2^2, \{x : a, d\}, \{y : a, d\}$$

### 3.3 Arc C

A new arc C is defined using intersection points c and d. In this case, reference is also made to Figure 1.

$$C \equiv (x - x_3)^2 + (y - y_3)^2 = r_3^2, \{x : c, d\}, \{y : c, d\}$$

### 4.0 Four circles

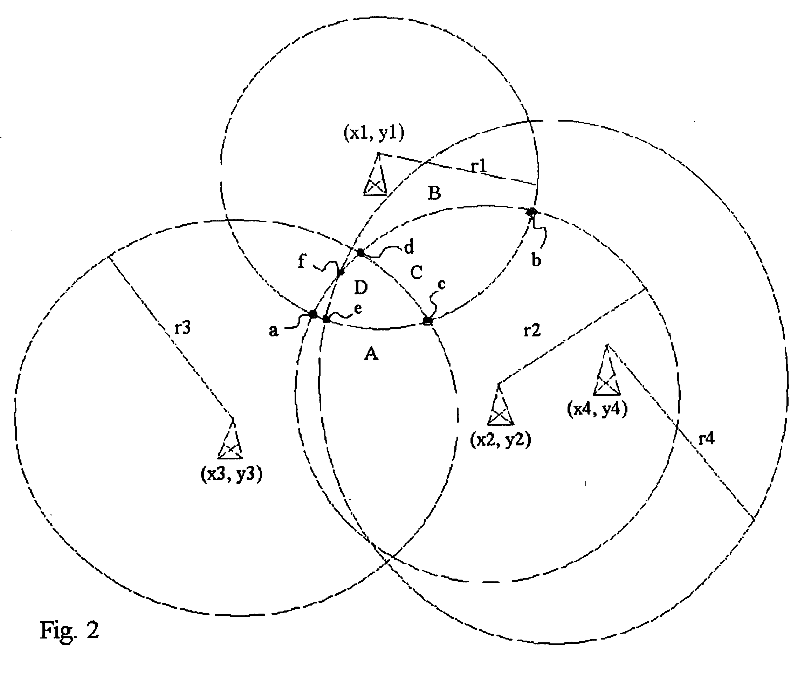

If at least four base stations are detected, the operations disclosed in this Section 4 must also be performed, in addition to the previous stages. This example is illustrated by reference to Figure 2.

### 4.1 Intersections of arcs A, B, C and circle 4

The intersections are sought in the same manner as in Sections 3.1 and 3.2. Thus three arcs instead of two must now be tested.

### 4.2 Arc A & Circle 4

$$A$$
$$(x - x_4)^2 + (y - y_4)^2 = r_4^2 \,,$$

which gives intersection point e (Figure 2).

A is redefined in a manner similar to that in the previous section:

The distances of intersection points a and c from the centre of circle 4 are measured and the following comparison and decision operation is performed

$$
\begin{array}{l}
s_a = \sqrt{(x_4 - x_a)^2 + (y_4 - y_a)^2} \\
s_c = \sqrt{(x_4 - x_c)^2 + (y_4 - y_c)^2}
\end{array}
\text{, if }
\begin{array}{l}
s_a \vee s_c \le r_4, ACCEPT \\
s_a \vee s_c > r_4, REJECT
\end{array}
$$

Now c meets the condition $\Rightarrow A \equiv (x-x_1)^2 + (y-y_1)^2 = r_1{}^2, \{x{:}e,c\}, \{y{:}e,c\}$ and is accepted as a substitute end point of arc A.

### 4.3 Arc B & Circle 4

$$
B \\
(x - x_4)^2 + (y - y_4)^2 = r_4{}^2 \text{ '}
$$

giving intersection point f.

Redefinition of B:

The distance of intersection points a and d from the centre of circle 4 are measured and a comparison and decision operation is performed

$$
\begin{array}{l}
s_a = \sqrt{(x_4 - x_a)^2 + (y_4 - y_a)^2} \\
s_d = \sqrt{(x_4 - x_d)^2 + (y_4 - y_d)^2}
\end{array}
\text{, if }
\begin{array}{l}
s_a \vee s_d \le r_4, ACCEPT \\
s_a \vee s_d > r_4, REJECT
\end{array}
$$

In this example too, intersection point d meets the condition

$$
\Rightarrow B \equiv (x - x_2)^2 + (y - y_2)^2 = r_2{}^2, \{x{:}f,d\}, \{y{:}f,d\}
$$

and is accepted.

### 4.4 Arc C & Circle 4

The test is made in the same way as above. In the example, circle 4 does not intersect arc C, which therefore does not require redefinition.

### 4.5 Definition of arc D

Arc D is defined using intersection points e and f :

$$D \equiv (x - x_4)^2 + (y - y_4)^2 = r_4{}^2, \{x : e, f\}, \{y : e, f\}$$

### 4.6 Measurement

A separate final measurement is made, to determine which intersection points and arcs will remain necessary. The measurement is made between the definition intermediate points (a, c, d) of Section (3) above and the centre of circle 4, in the manner disclosed in the next section. This example too refers to Figure 2.

### 4.7 Making the measurement

Arc C is tested, i.e. the following measurement is made

$$\begin{aligned} s_a &= \sqrt{(x_4 - x_a)^2 + (y_4 - y_a)^2} \\ s_c &= \sqrt{(x_4 - x_c)^2 + (y_4 - y_c)^2} \\ s_d &= \sqrt{(x_4 - x_d)^2 + (y_4 - y_d)^2} \end{aligned} \quad , \text{if} \quad \begin{aligned} s_a \vee s_c \vee s_d &\leq r_4, ACCEPT \\ s_a \vee s_c \vee s_d &> r_4, REJECT \end{aligned}$$

Intersection points c and d meet the condition, so arc C is retained.

### 5.0 Five, six, seven circles

If more than four base stations are detected, the operations in Section 4 are repeated.

### 6.0 Factors affecting the final location selection

The additional operations disclosed in this Section 6 can also be performed when estimating the final location to be defined for the terminal device.

### 6.1 Quality factor

A "quality factor" (totalizer) is used to make the final location selection. The quality factor of each circle that intersects an active arc (i.e. one having a definition interval) increases as follows.

Totalizer:

The quality factor = n - 1, where n = the number of intersecting circles
E.g., if 1, 2, and 3 intersect, the quality factor is 2 and if 1, 3, 5, 7 intersect the factor is 3, etc.

### 6.3 Order

For the quality factor concept to be reasonable, the order of intersection of the circles must be precisely defined.
The following is a list of the precise order for proceeding. The first two numbers in bold are of the definition area delimited by the circle for which intersections are sought.
**12**34567
**13**4567
**14**567
**15**67
**16**7
**23**4567
**24**567

2567
267
34567
3567
367
4567
467
567
57
67

### 6.4 Location point

Once the area, delimited by the arcs, with the highest quality factor is known, the average of the intersection, i.e. node points is calculated and stated as the location point.

$$P \equiv \left( \bar{x}, \bar{y} \right) = \left( \frac{\sum\limits_{i=1}^{n} x_i}{n}, \frac{\sum\limits_{i=1}^{n} y_i}{n} \right),$$

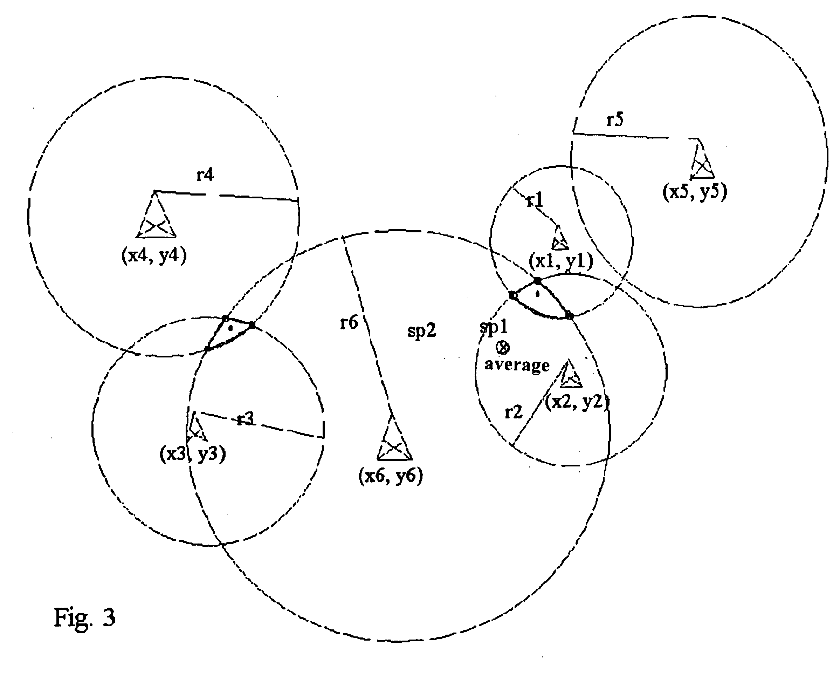

where n = the number of intersection points.
If two or more areas with the same quality factor are formed, the weighted average of the co-ordinates of the base stations is calculated and compared to the location points of the areas with the same quality factor, the smallest distance being chosen as the correct location point. Figure 3 shows an example of this kind.
The weighting coefficients are obtained as follows:

$$K_i = -\frac{99}{70} * dBm_i + \frac{997}{7},$$

i.e. the weighting coefficients vary from 100$\rightarrow$ 1, when dBm varies from -30$\rightarrow$-100.
Weighted average:

$$PK = \left( \frac{\sum\limits_{i=1}^{n} K_i x_i}{\sum\limits_{i=1}^{n} K_i}, \frac{\sum\limits_{i=1}^{n} K_i y_i}{\sum\limits_{i=1}^{n} K_i} \right)$$

Measurement of the distance from the weighted average to the location point:

$$s_{p1} = \sqrt{\left( x_{pkesk.} - x_{p1} \right)^2 + \left( y_{pkesk.} - y_{p1} \right)^2}$$
$$\downarrow$$
$$s_{pn} = \sqrt{\left( x_{pkesk.} - x_{pn} \right)^2 + \left( y_{pkesk.} - y_{pn} \right)^2},$$

**7.0 Conditions**

Before the operations disclosed in the previous section are performed, it is preferable to apply the following processing conditions:

- If two or more channels (CH) have the same base-station co-ordinates, only the first is taken into account. The others are automatically dropped from the examination.

- If no intersection points are found with any arc for the circle now being examined, the examination moves to the next circle.

- If TA $\neq$ 0 and channel 1's TA = i the run is performed so that the other six channels' TA = 0→i. I.e. if channel 1's TA = 2, the others' TA = 0, 1, 2, thus, the program is run three times. The area thus obtained with the best quality factor is selected, or, if necessary, the base-station weighted-average method is used.

- If no circles intersect, only the weighted average of the base stations' co-ordinates is stated.

**Calculation of the weighted average**

The weighted average of the base stations' co-ordinates can also be calculated as follows:
The weighting coefficients are defined as follows:

$$K_i = -\frac{99}{70} * dBm_i + \frac{997}{7},$$

i.e. the weighting coefficients vary from 100→1, when dBm varies from -30→-100.
The weighted average is calculated from the equation:

$$PK = \left( \frac{\sum_{i=1}^{n} K_i x_i}{\sum_{i=1}^{n} K_i}, \frac{\sum_{i=1}^{n} K_i y_i}{\sum_{i=1}^{n} K_i} \right).$$

**Location method based on the weighted average**

The mobile phone can also be located using the so-called weighted average method. In this method, the co-ordinates of each visible base station are given a certain weighting coefficient, based on the reception power level, and a location for the mobile phone is calculated from them. The weighting coefficients can be calculated in many alternative ways. E.g., the weighting coefficients can be calculated from the following equation:

$$K_i = \frac{99}{70} \cdot RxLev + \frac{997}{7}$$

Thus, the weighting coefficients then vary between 100...1, if RxLev varies between - 30...-100dBm.
Alternatively, the weighting coefficients can also be calculated using the following simpler equation:

$$K_i = RxLev + 142 \text{ , if } (-42 \leq RxLev \leq -100)dBm$$

This means that the weighting coefficients are between 42...100, if the reception power level is between -42...-100 dBm, while the weighting coefficient will change by one unit when the power level changes by one. One further possible way is to calculate the weighting coefficients piecewise linearly, according to the following equation:

$$K_i = \frac{13}{15} \cdot RxLevel + 126 \text{, if } (-60 \leq RxLevel \leq -30)dBm$$

$$K_i = \frac{73}{40} \cdot RxLevel + 183,5 \text{, if } (-100 \leq RxLevel \leq -61)dBm$$

The weighted average is then calculated with the aid of the weighting coefficients and base-station co-ordinates, as follows:

$$PK = \left( \frac{\sum_{i=1}^{n} K_i \cdot x_i}{\sum_{i=1}^{n} K_i} , \frac{\sum_{i=1}^{n} K_i \cdot y_i}{\sum_{i=1}^{n} K_i} \right)$$

in which $K_i$ is a weighting coefficient and $y_i$ and $x_i$ are the co-ordinates of the relevant base station. In this alternative, the weighting coefficients correspond better to reality. The following is an example of the calculation of the co-ordinates of one point, on the basis of base-station data. Three base stations are used in the calculation.

Values for the example calculation:

| Cell | 1 | 2 | 3 |
|---|---|---|---|
| Reception power level [dBm] | -56 | -66 | -75 |
| Weighting coefficient | 63,2 | 49,1 | 36,4 |
| X co-ordinate | 3381000,0 | 3384950,0 | 3382050,0 |
| Y co-ordinate | 6694850,0 | 6691900,0 | 6688775,0 |

The data shown in the table can be inserted in the equation shown above, to give the following equations:

$$X_{pk} = \frac{63,2 \cdot 3381000,0 + 49,1 \cdot 3384950,0 + 36,4 \cdot 3382050,0}{63,2 + 49,1 + 36,4} = 3382561,3$$

$$Y_{pk} = \frac{63,2 \cdot 6694850,0 + 49,1 \cdot 6691900,0 + 36,4 \cdot 6688775,0}{63,2 + 49,1 + 36,4} = 6692388,8$$

Thus, in this example, the co-ordinate point (3382561,3; 6692388,8) is obtained as the weighted average of the co-ordinates.
The algorithms of the location method can be used in such a way, that the weighting coefficients are calculated using different methods, depending on the terrain. Generally known connection-distance attenuation models can also be utilized to calculate the weighting coefficients. The so-called Walfish-Bertoni model is one model that is highly suitable for an urban area. In a built-up area on the other hand, the Okumura-Hata model works well, provided parameters are used to adapt it to a built-up environment.

**Claims**

1. A service-request message relating to an order for a service and to be sent from a terminal device or switching centre of a mobile telephone network to a server connected to the mobile telephone network, the service-request message containing data identifying the service ordered and first parameters for determining a location of the terminal device at a first moment by means of operations to be performed in the server,
**characterized in that** the service-request message also contains second parameters at least partly differing from the first parameters, for determining a location of the terminal device at a second moment, and that the first and second parameters include a value depicting the strength of the signal of a base station of the mobile telephone network, measured by the terminal device, and identifying data of the base station sending the measured signal, for at least two separate base stations.

2. A service-request message according to Claim 1, **characterized in that** the first and second parameters include location data of the base station sending the measured signal, which is given as, for example, co-ordinates.

3. A service-request message according to Claim 1 or 2, **characterized in that** it is a GSM-network short message, SMS.

4. A service-request message according to any of Claims 1 - 3, **characterized in that** it is a message to be sent in connection with ordering a WAP-based service.

5. A service-request message according to any of Claims 1 - 4, **characterized in that**

   - the first parameters concern a first group of base stations, and
   - the second parameters concern a second group of base stations, differing from the first group of base stations by at least one base station, due to the movement of the terminal device that has taken place between the first and second moments.

6. A service-request message according to any of Claims 1 - 5, **characterized in that** it includes time data corresponding to the first and second moments, for estimating the speed of the terminal device.

7. A method for determining a location of a terminal device of a mobile telephone network in connection with a location-dependent service, which method comprises the steps of

   - receiving a service request, sent by the terminal device, and which includes data for identifying the service,
   - receiving first parameters sent by the terminal device or mobile telephone network, for determining a location of the terminal device at a first moment, the first parameters including a value relating to the signal of a mobile telephone network base station, and identification data of the base station sending the signal, for at least two separate base stations,
   - receiving second parameters sent by the terminal device or mobile telephone network, for determining a location of the terminal device at a second moment, the second parameters including a value relating to the signal of a mobile telephone network base station, and identification data of the base station sending the signal, for at least two separate base stations,
   - determining, on the basis of the parameters received, the location of the terminal device at least at the second moment, to direct the service, on the basis of the location determined for the terminal device,
   - determining, on the basis of the parameters received, the direction of movement of the terminal device, and
   - sending information on the service request received, and on the location or locations and direction of movement determined for the terminal device, for use by the service,

   **characterized in that**

   - the values relating to the signals in the first and second parameters are values depicting the strengths of the signals of the mobile telephone network base station measured by the terminal device for at least two separate base stations.

8. A method according to Claim 7, **characterizied** in that the service request and parameters are received in a digital mobile telephone network, such as a GSM network, in the form of SMS short messages.

9. A method according to Claim 7 or 8, **characterized in that** the service request and parameters are received in message form, in such a way that they are included in a single message sent by the terminal device.

10. A method according to any of Claims 7 - 9, **characterized in that** the service is a WAP-based service.

11. A method according to Claim 7, **characterized in that**

   - the distance of the terminal device from the base stations is calculated from the values depicting the strength of the signals of the base stations,
   - circles, depicting the possible location points of the terminal device, are defined from the locations of the base stations and the distances of the terminal device from the base stations, each circle's radius ($r_i$) being the corresponding determined distance, and its centre the relevant base station's location point ($x_i$, $y_i$),
   - the intersections (a, b, ...) of the circles are determined,
   - the average point calculated from the intersection points (a, b, ...) of the circles is determined to be the location point of the terminal device.

12. A method according to Claim 11, **characterized in that** the ares (A, B, ...) of the circles remaining between the intersection points (a, b, ...) are determined.

13. A method according to Claim 12, **characterized in that**, if there are more than two base stations, after determining the intersection points (a, b, ...) of the circles defined from the first and second base stations and the arcs (A, B, ...) remaining between them, when dealing with each subsequent circle, for each previously determined arc

   - the intersection points of the circle being dealt with and each selected are are determined,
   - the radius ($r_i$) of the circle being dealt with is compared with the distance of the centre of the said circle from the previously selected intersection points, and
   - on the basis of the comparison, the previously defined arcs are redefined, so that the arcs' parts remaining outside the circle being dealt with are removed.

14. A method according to Claim 13, **characterized in that**, if there are more than three base stations, after dealing with the circles defined from the first, second, and third base stations, when dealing with each subsequent circle, each intersection point (a, b, ...) and each redefined arc (A, B, ...) are examined, and each intersection point or arc, which is observed to remain outside the circle being dealt with, is removed from the processing.

15. A method according to any of Claims 11 - 14, **characterized in that**, if more than one base station has the same co-ordinates ($x_i$, $y_i$), only one of the base stations with the same co-ordinates is taken into account in processing and each subsequent base station with the same co-ordinates is removed from the processing.

16. A method according to any of Claims 12-15, **characterized in that**, after dealing with the second circle, before taking each subsequent circle for examination, a check is made to see if the circle to be dealt with has any intersection point (a, b, ...) with a previously selected arc (A, B, ...), and, if it has no intersection points, the circle is rejected from processing.

17. A method according to any of Claims 7 - 16, **characterized in that**

   - the service is provided on the basis of the location and direction of movement determined.

18. A terminal device, which is a mobile telephone adapted, from a command, to measure first and second parameters for determining a location of the mobile telephone at a first and second moment, respectively, **characterized in that**

   - the parameters include a value depicting a strength of a signal of a base station of a mobile telephone network, measured by the mobile telephone, and identifying data of the base station sending the measured signal, for at least two separate base stations, and
- the mobile telephone is adapted to form, on the basis of the measured parameters, a service-request message according to any of Claims 1 - 6.

19. A subscriber card for a mobile telephone, which subscriber card contains a program means to be run by the mobile phone, **characterized in that** the program means are adapted to control the mobile phone from a command to

- measure first and second parameters for determining a location of the mobile telephone at a first and second moment, respectively, wherein the parameters include a value depicting a strength of a signal of a base station of a mobile telephone network, measured by the mobile telephone, and identifying data of the base station sending the measured signal, for at least two separate base stations, and
- form, on the basis of the measured parameters, a service-request message according to any of Claims 1 - 6.

20. A mobile telephone network switching centre, which is adapted, from a command, to

- receive, from at least two separate base stations, first and second parameters for determining a location of a mobile telephone at a first and second moment, respectively,

**characterized in that**

- the first and second parameters include a value depicting a strength of a signal of the mobile telephone, measured by the base station of the mobile telephone network, and identifying data of the base station sending the measured signal, and
- the mobile telephone network switching centre is adapted to form, on the basis of the measured parameters, a service-request message containing the first and second parameters and identifying data of the base stations sending the measured signals, for at least two separate base stations.

21. A mobile telephone network switching centre, which is adapted

- to receive first and second parameters measured and sent by a mobile telephone, which depict the locations of the mobile telephone at a first and correspondingly a second moment,

**characterized in that**

- the parameters include a value depicting a strength of a signal of a base station of a mobile telephone network, measured by the mobile telephone, and identifying data of the base station sending the measured signal, and
- the mobile telephone network switching centre is adapted to form, on the basis of the measured parameters, a service-request message according to any of Claims 1 - 6.

**Patentansprüche**

1. Dienstanforderungsnachricht, die eine Anforderung eines Dienstes betrifft und die von einem Endgerät oder von einer Schaltzentrale in einem mobilen Telefonnetzwerk an einen Server gesendet wird, der mit dem mobilen Telefonnetzwerk verbunden ist, wobei die Dienstanforderungsnachricht Daten, die den angeforderten Dienst identifizieren, und erste Parameter zur Bestimmung eines Standortes des Endgeräts zu einem ersten Zeitpunkt mittels im Server durchgeführter Vorgänge enthält, **dadurch gekennzeichnet, dass** die Dienstanforderungsnachricht auch zweite Parameter, die sich zumindest teilweise von den ersten Parametern unterscheiden, zur Bestimmung eines Standortes des Endgeräts zu einem zweiten Zeitpunkt enthält, und dass die ersten und zweiten Parameter einen Wert, der die Stärke des durch das Endgerät gemessenen Signals einer Basisstation in dem mobilen Telefonnetzwerk beschreibt, und identifizierende Daten der Basisstation, die das gemessene Signal sendet, für mindestens zwei separate Basisstationen umfassen.

2. Dienstanforderungsnachricht nach Anspruch 1, **dadurch gekennzeichnet, dass** die ersten und zweiten Parameter Standortdaten der Basisstation umfassen, die das gemessene Signal sendet, welche zum Beispiel als Koordinaten angegeben werden.

3. Dienstanforderungsnachricht nach Anspruch 1 oder 2, **dadurch gekennzeichnet, dass** es sich um eine Kurzmitteilung, SMS, in einem GSM-Netzwerk handelt.

4.  Dienstanforderungsnachricht nach einem der Ansprüche 1 bis 3,
    **dadurch gekennzeichnet, dass** es sich um eine Nachricht handelt, die in Verbindung mit der Anforderung eines WAP-basierten Dienstes zu senden ist.

5.  Dienstanforderungsnachricht nach einem der Ansprüche 1 bis 4,
    **dadurch gekennzeichnet, dass**

    - die ersten Parameter eine erste Gruppe von Basisstationen betreffen, und
    - die zweiten Parameter eine zweite Gruppe von Basisstationen betreffen, die von der ersten Gruppe von Basisstationen aufgrund der Bewegung des Endgeräts, die zwischen dem ersten und dem zweiten Zeitpunkt stattgefunden hat, durch mindestens eine Basisstation abweichen.

6.  Dienstanforderungsnachricht nach einem der Ansprüche 1 bis 5,
    **dadurch gekennzeichnet, dass** sie Zeitangaben zur Schätzung der Geschwindigkeit des Endgeräts umfasst, die dem ersten Zeitpunkt und dem zweiten Zeitpunkt entsprechen.

7.  Verfahren zur Bestimmung eines Standortes eines Endgeräts in einem mobilen Telefonnetzwerk in Verbindung mit einem standortabhängigen Dienst, welches Verfahren die folgenden Schritte umfasst:

    - Empfangen einer von dem Endgerät gesendeten Dienstanforderung, die Daten zur Identifizierung des Dienstes umfasst,
    - Empfangen der ersten von dem Endgerät oder dem mobilen Telefonnetzwerk gesendeten Parameter zur Bestimmung eines Standortes des Endgeräts zu einem ersten Zeitpunkt, wobei die ersten Parameter einen Wert, der das Signal einer Basisstation in einem mobilen Telefonnetzwerk betrifft, und identifizierende Daten der das Signal sendenden Basisstation für mindestens zwei separate Basisstationen umfassen,
    - Empfangen der zweiten von dem Endgerät oder dem mobilen Telefonnetzwerk gesendeten Parameter zur Bestimmung eines Standortes des Endgeräts zu einem zweiten Zeitpunkt, wobei die zweiten Parameter einen Wert, der das Signal einer Basisstation in einem mobilen Telefonnetzwerk betrifft, und identifizierende Daten der das Signal sendenden Basisstation für mindestens zwei separate Basisstationen umfassen,
    - Bestimmen des Standorts des Endgeräts aufgrund der empfangenen Parameter zu mindestens dem zweiten Zeitpunkt, um den Dienst aufgrund des für das Endgerät bestimmten Standortes weiterzuleiten,
    - Bestimmen der Richtung der Bewegung des Endgeräts aufgrund der empfangenen Parameter, und
    - Senden von Informationen über die empfangene Dienstanforderung und über den Standort oder die Standorte sowie die für das Endgerät bestimmte Richtung der Bewegung zur Benutzung durch den Dienst,

    **dadurch gekennzeichnet, dass**

    - die Werte, die die Signale in den ersten und zweiten Parametern betreffen, Werte sind, die die Stärken der Signale der Basisstation in dem mobilen Telefonnetzwerk beschreiben, die durch das Endgerät für mindestens zwei separate Basisstationen gemessen wurden.

8.  Verfahren nach Anspruch 7, **dadurch gekennzeichnet, dass** die Dienstanforderung und die Parameter in einem digitalen mobilen Telefonnetzwerk empfangen werden, wie zum Beispiel in einem GSM-Netzwerk, in Form von SMS-Kurzmitteilungen.

9.  Verfahren nach Anspruch 7 oder 8, **dadurch gekennzeichnet, dass** die Dienstanforderung und die Parameter in Mitteilungsform empfangen werden, so dass sie in einer einzigen von dem Endgerät gesendeten Mitteilung enthalten sind.

10. Verfahren nach einem der Ansprüche 7 bis 9, **dadurch gekennzeichnet, dass** der Dienst ein WAP-basierter Dienst ist.

11. Verfahren nach Anspruch 7, **dadurch gekennzeichnet, dass**

    - die Entfernung des Endgeräts von den Basisstationen aus den Werten errechnet wird, die die Stärke der Signale der Basisstationen beschreiben,

- Kreise, die die möglichen Standortpunkte des Endgeräts beschreiben, aufgrund der Standorte der Basisstationen und der Entfernungen des Endgeräts von den Basisstationen definiert werden, wobei der Radius ($r_i$) jedes Kreises die entsprechende definierte Entfernung und das Zentrum der Standortpunkt ($x_i$, $y_i$) der betreffenden Basisstation ist,
- die Schnittpunkte (a, b, ...) der Kreise bestimmt werden,
- der aus den Schnittpunkten (a, b, ...) der Kreise berechnete Durchschnittspunkt zum Standortpunkt des Endgerätes bestimmt wird.

12. Verfahren nach Anspruch 11, **dadurch gekennzeichnet, dass** die Bögen (A, B, ...) der zwischen den Schnittpunkten (a, b, ...) verbleibenden Kreise bestimmt werden.

13. Verfahren nach Anspruch 12, **dadurch gekennzeichnet, dass**, falls mehr als zwei Basisstationen vorliegen, nach der Bestimmung der Schnittpunkte (a, b, ...) der Kreise, die aufgrund der ersten und der zweiten Basisstation und der dazwischen verbleibenden Bögen (A, B, ...) definiert wurden, während der Behandlung jedes nachfolgenden Kreises für jeden vorher bestimmten Bogen

   - die Schnittpunkte des behandelten Kreises und jeder ausgewählte Bogen bestimmt werden,
   - der Radius ($r_i$) des behandelten Kreises mit der Entfernung des Zentrums des genannten Kreises von den vorher ausgewählten Schnittpunkten verglichen wird, und
   - aufgrund des Vergleichs die vorher definierten Bögen neu definiert werden, so dass die Teile der Bögen des behandelten Kreises, die außerhalb des Kreises verbleiben, entfernt werden.

14. Verfahren nach Anspruch 13, **dadurch gekennzeichnet, dass**, falls mehr als drei Basisstationen vorliegen, nach der Behandlung der Kreise, die aufgrund der ersten, zweiten und dritten Basisstation definiert wurden, bei der Behandlung jedes nachfolgenden Kreises jeder Schnittpunkt (a, b, ...) und jeder neu definierte Bogen (A, B, ...) untersucht werden, und jeder Schnittpunkt oder Bogen, von dem festgestellt wird, dass er außerhalb des behandelten Kreises verbleibt, aus dem Prozess entfernt wird.

15. Verfahren nach einem der Ansprüche 11 bis 14, **dadurch gekennzeichnet, dass**, falls mehr als eine Basisstation die gleichen Koordinaten ($x_i$, $y_i$) aufweist, nur eine der Basisstationen mit den gleichen Koordinaten in dem Prozess berücksichtigt wird und jede nachfolgende Basisstation mit den gleichen Koordinaten aus dem Prozess entfernt wird.

16. Verfahren nach einem der Ansprüche 12 bis 15, **dadurch gekennzeichnet, dass** nach der Behandlung des zweiten Kreises vor der Aufnahme jedes nachfolgenden Kreises in die Untersuchung eine Überprüfung durchgeführt wird, ob der behandelte Kreis einen Schnittpunkt (a, b, ...) mit einem vorher ausgewählten Bogen (A, B, ...) aufweist und, falls er keine Schnittpunkte aufweist, der Kreis aus dem Prozess genommen wird.

17. Verfahren nach einem der Ansprüche 7 bis 16, **dadurch gekennzeichnet, dass**

   - der Dienst aufgrund des bestimmten Standortes und der bestimmten Bewegungsrichtung bereit gestellt wird.

18. Endgerät, das ein Mobiltelefon ist, das zum Messen von ersten und zweiten Parametern zur Bestimmung eines Standortes des Mobiltelefons zu einem ersten beziehungsweise einem zweiten Zeitpunkt auf Befehl einsetzbar ist, **dadurch gekennzeichnet, dass**

   - die Parameter einen Wert, der eine Stärke eines durch das Mobiltelefon gemessenen Signals einer Basisstation in einem mobilen Telefonnetzwerk beschreibt, sowie identifizierende Daten der Basisstation, die das gemessene Signal sendet, für mindestens zwei separate Basisstationen umfassen, und
   - das Mobiltelefon anhand der gemessenen Parameter zur Bildung einer Dienstanforderungsnachricht nach einem der Ansprüche 1 bis 6 einsetzbar ist.

19. Teilnehmerkarte für ein Mobiltelefon, welche Teilnehmerkarte ein Programmmittel zur Steuerung durch das Mobiltelefon enthält, **dadurch gekennzeichnet, dass** das Programmmittel zur Steuerung des Mobiltelefons auf Befehl einsetzbar ist, um

   - die ersten und zweiten Parameter zur Bestimmung eines Standortes des Mobiltelefons zu einem ersten beziehungsweise einem zweiten Zeitpunkt zu messen, wobei die Parameter einen Wert, der eine Stärke eines durch das Mobiltelefon gemessenen Signals einer Basisstation in einem mobilen Telefonnetzwerk beschreibt, sowie identifizierende Daten der Basisstation, die das gemessene Signal sendet, für mindestens zwei separate Basisstationen umfassen, und
- anhand der gemessenen Parameter eine Dienstanforderungsnachricht nach einem der Ansprüche 1 bis 6 zu bilden.

**20.** Schaltzentrale eines mobilen Telefonnetzwerkes, das auf Befehl einsetzbar ist, um

- von mindestens zwei separaten Basisstationen erste und zweite Parameter zur Bestimmung eines Standortes eines Mobiltelefons zu einem ersten beziehungsweise einem zweiten Zeitpunkt zu empfangen,

**dadurch gekennzeichnet, dass**

- die ersten und zweiten Parameter einen Wert, der eine Stärke eines durch die Basisstation des mobilen Telefonnetzwerks gemessenen Signals des Mobiltelefons beschreibt, sowie identifizierende Daten der Basisstation, die das gemessene Signal sendet, umfassen, und
- die Schaltzentrale des mobilen Telefonnetzwerkes aufgrund der gemessenen Parameter zur Bildung einer Dienstanforderungsnachricht einsetzbar ist, die die ersten und zweiten Parameter sowie identifizierende Daten der Basisstationen, die die gemessenen Signale senden, für mindestens zwei separate Basisstationen enthält.

**21.** Schaltzentrale eines mobilen Telefonnetzwerkes, die einsetzbar ist

- zum Empfangen der ersten und zweiten Parameter, die von einem Mobiltelefon gemessen und gesendet wurden und die die Standorte des Mobiltelefons zu einem ersten beziehungsweise einem zweiten Zeitpunkt beschreiben,

**dadurch gekennzeichnet, dass**

- die Parameter einen Wert, der eine Stärke eines durch das Mobiltelefon gemessenen Signals einer Basisstation in einem mobilen Telefonnetzwerk beschreibt, sowie identifizierende Daten der Basisstation, die das gemessene Signal sendet, umfassen, und
- die Schaltzentrale des mobilen Telefonnetzwerkes anhand der gemessenen Parameter zur Bildung einer Dienstanforderungsnachricht nach einem der Ansprüche 1 bis 6 einsetzbar ist.

## Revendications

**1.** Message de demande de service concernant une commande d'un service et devant être envoyé d'un dispositif terminal ou d'un centre de commutation d'un réseau de téléphonie mobile à un serveur connecté au réseau de téléphonie mobile, le message de demande de service contenant des données identifiant le service commandé et des premiers paramètres pour déterminer une localisation du dispositif terminal à un premier moment au moyen d'opérations devant être effectuées dans le serveur, **caractérisé en ce que** le message de demande de service contient également des seconds paramètres différant au moins en partie des premiers paramètres, pour déterminer une localisation du dispositif terminal à un second moment, et que les premiers et seconds paramètres incluent une valeur représentant l'intensité du signal d'une station de base du réseau de téléphonie mobile, mesurée par le dispositif terminal, et des données d'identification de la station de base envoyant le signal mesuré, pour au moins deux stations de base distinctes.

**2.** Message de demande de service selon la revendication 1, **caractérisé en ce que** les premiers et seconds paramètres incluent des données de localisation de la station de base envoyant le signal mesuré, qui sont données, par exemple, sous forme de coordonnées.

**3.** Message de demande de service selon la revendication 1 ou 2, **caractérisé en ce qu'**il s'agit d'un message court du réseau GSM, SMS.

**4.** Message de demande de service selon l'une quelconque des revendications 1 à 3, **caractérisé en ce qu'**il s'agit d'un message devant être envoyé en relation avec la commande d'un service basé sur le WAP.

**5.** Message de demande de service selon l'une quelconque des revendications 1 à 4, **caractérisé en ce que**

- les premiers paramètres concernent un premier groupe de stations de base, et
- les seconds paramètres concernent un second groupe de stations de base, différant du premier groupe de stations de base d'au moins une station de base, en raison du déplacement du dispositif terminal qui a eu lieu entre les premier et second moments.

6. Message de demande de service selon l'une quelconque des revendications 1 à 5, **caractérisé en ce qu'**il inclut des données temporelles correspondant aux premier et second moments, pour estimer la vitesse du dispositif terminal.

7. Procédé pour déterminer une localisation d'un dispositif terminal d'un réseau de téléphonie mobile en relation avec un service dépendant de la localisation, lequel procédé comprend les étapes consistant à

- recevoir une demande de service, envoyée par le dispositif terminal, et qui inclut des données pour identifier le service,
- recevoir des premiers paramètres envoyés par le dispositif terminal ou le réseau de téléphonie mobile, pour déterminer une localisation du dispositif terminal à un premier moment, les premiers paramètres incluant une valeur relative au signal d'une station de base du réseau de téléphonie mobile, et des données d'identification de la station de base envoyant le signal, pour au moins deux stations de base distinctes,
- recevoir des seconds paramètres envoyés par le dispositif terminal ou le réseau de téléphonie mobile, pour déterminer une localisation du dispositif terminal à un second moment, les seconds paramètres incluant une valeur relative au signal d'une station de base du réseau de téléphonie mobile, et des données d'identification de la station de base envoyant le signal, pour au moins deux stations de base distinctes,
- déterminer, sur la base des paramètres reçus, la localisation du dispositif terminal au moins au second moment, pour diriger le service, sur la base de la localisation déterminée pour le dispositif terminal,
- déterminer, sur la base des paramètres reçus, la direction de déplacement du dispositif terminal, et
- envoyer des informations sur la demande de service reçue, et sur la localisation ou les localisations et la direction de déplacement déterminées pour le dispositif terminal, pour l'utilisation par le service,

**caractérisé en ce que**

- les valeurs relatives aux signaux dans les premiers et seconds paramètres sont des valeurs représentant les intensités des signaux de la station de base du réseau de téléphonie mobile mesurées par le dispositif terminal pour au moins deux stations de base distinctes.

8. Procédé selon la revendication 7, **caractérisé en ce que** la demande de service et les paramètres sont reçus dans un réseau de téléphonie mobile numérique, comme un réseau GSM, sous forme de messages courts SMS.

9. Procédé selon la revendication 7 ou 8, **caractérisé en ce que** la demande de service et les paramètres sont reçus sous forme de message, de telle sorte qu'ils soient inclus dans un seul message envoyé par le dispositif terminal.

10. Procédé selon l'une quelconque des revendications 7 à 9, **caractérisé en ce que** le service est un service basé sur le WAP.

11. Procédé selon la revendication 7, **caractérisé en ce que**

- la distance du dispositif terminal par rapport aux stations de base est calculée à partir des valeurs représentant l'intensité des signaux des stations de base,
- des cercles, représentant les points de localisation possibles du dispositif terminal, sont définis à partir des localisations des stations de base et des distances du dispositif terminal par rapport aux stations de base, le rayon ($r_i$) de chaque cercle étant la distance déterminée correspondante, et son centre le point de localisation ($x_i$, $y_i$) de la station de base pertinente,
- les intersections (a, b,...) des cercles sont déterminées,
- le point moyen calculé à partir des points d'intersection (a, b,...) des cercles est déterminé comme étant le point de localisation du dispositif terminal.

12. Procédé selon la revendication 11, **caractérisé en ce que** les arcs (A, B,...) des cercles restant entre les points d'intersection (a, b, ...) sont déterminés.

**13.** Procédé selon la revendication 12, **caractérisé en ce que**, s'il y a plus de deux stations de base, après la détermination des points d'intersection (a, b,...) des cercles définis à partir des première et deuxième stations de base et des arcs (A, B,...) restant entre eux, lors du traitement de chaque cercle subséquent, pour chaque arc précédemment déterminé

- les points d'intersection du cercle qui est traité et chaque arc sélectionné sont déterminés,
- le rayon ($r_i$) du cercle qui est traité est comparé avec la distance du centre dudit cercle à partir des points d'intersection précédemment sélectionnés, et
- sur la base de la comparaison, les arcs précédemment définis sont redéfinis, de sorte que les parties des arcs restant à l'extérieur du cercle qui est traité soient supprimées.

**14.** Procédé selon la revendication 13, **caractérisé en ce que**, s'il y a plus de trois stations de base, après le traitement des cercles définis à partir des première, deuxième et troisième stations de base, lors du traitement de chaque cercle subséquent, chaque point d'intersection (a, b,...) et chaque arc redéfini (A, B,...) sont examinés, et chaque point d'intersection ou chaque arc, qui est observé comme restant à l'extérieur du cercle qui est traité, est enlevé du traitement.

**15.** Procédé selon l'une quelconque des revendications 11 à 14, **caractérisé en ce que**, si plus d'une station de base a les mêmes coordonnées ($x_i$, $y_i$), une seule des stations de base avec les mêmes coordonnées est prise en compte dans le traitement et chaque station de base subséquente avec les mêmes coordonnées est enlevée du traitement.

**16.** Procédé selon l'une quelconque des revendications 12 à 15, **caractérisé en ce que**, après le traitement du deuxième cercle, avant d'examiner chaque cercle subséquent, une vérification est effectuée pour voir si le cercle à traiter a un quelconque point d'intersection (a, b,...) avec un arc précédemment sélectionné (A, B,...), et, s'il n'a pas de point d'intersection, le cercle est rejeté du traitement.

**17.** Procédé selon l'une quelconque des revendications 7 à 16, **caractérisé en ce que**

- le service est fourni sur la base de la localisation et de la direction de déplacement déterminées.

**18.** Dispositif terminal, qui est un téléphone mobile adapté, à partir d'un ordre, pour mesurer des premiers et seconds paramètres pour déterminer une localisation du téléphone mobile à un premier et un second moment, respectivement, **caractérisé en ce que**

- les paramètres incluent une valeur représentant une intensité d'un signal d'une station de base d'un réseau de téléphonie mobile, mesurée par le téléphone mobile, et des données d'identification de la station de base envoyant le signal mesuré, pour au moins deux stations de base distinctes, et
- le téléphone mobile est adapté pour former, sur la base des paramètres mesurés, un message de demande de service selon l'une quelconque des revendications 1 à 6.

**19.** Carte d'abonné pour un téléphone mobile, laquelle carte d'abonné contient des moyens de programme devant être exécutés par le téléphone mobile, **caractérisée en ce que** les moyens de programme sont adaptés pour commander le téléphone mobile à partir d'un ordre pour

- mesurer des premiers et seconds paramètres pour déterminer une localisation du téléphone mobile à un premier et un second moment, respectivement, où les paramètres incluent une valeur représentant une intensité d'un signal d'une station de base d'un réseau de téléphonie mobile, mesurée par le téléphone mobile, et des données d'identification de la station de base envoyant le signal mesuré, pour au moins deux stations de base distinctes, et
- former, sur la base des paramètres mesurés, un message de demande de service selon l'une quelconque des revendications 1 à 6.

**20.** Centre de commutation d'un réseau de téléphonie mobile, qui est adapté, à partir d'un ordre, pour

- recevoir, en provenance d'au moins deux stations de base distinctes, des premiers et seconds paramètres pour déterminer une localisation d'un téléphone mobile à un premier et un second moment, respectivement,

**caractérisé en ce que**

- les premiers et seconds paramètres incluent une valeur représentant une intensité d'un signal du téléphone mobile, mesurée par la station de base du réseau de téléphonie mobile, et des données d'identification de la station de base envoyant le signal mesuré, et

- le centre de commutation du réseau de téléphonie mobile est adapté pour former, sur la base des paramètres mesurés, un message de demande de service contenant les premiers et seconds paramètres et des données d'identification des stations de base envoyant les signaux mesurés, pour au moins deux stations de base distinctes.

21. Centre de commutation d'un réseau de téléphonie mobile, qui est adapté

- pour recevoir des premiers et seconds paramètres mesurés et envoyés par un téléphone mobile, qui représentent les localisations du téléphone mobile à un premier et de manière correspondante à un second moment,

**caractérisé en ce que**

- les paramètres incluent une valeur représentant une intensité d'un signal d'une station de base d'un réseau de téléphonie mobile, mesurée par le téléphone mobile, et des données d'identification de la station de base envoyant le signal mesuré, et

- le centre de commutation du réseau de téléphonie mobile est adapté pour former, sur la base des paramètres mesurés, un message de demande de service selon l'une quelconque des revendications 1 à 6.

Fig. 1

EP 1 216 590 B1

Fig. 2

EP 1 216 590 B1

EP 1 216 590 B1

r5

r4

(x5, y5)

r1

(x4, y4)

(x1, y1)

r6

sp2

sp1

⊗
average

(x2, y2)

r3

r2

(x3, y3)

(x6, y6)

Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5926765 A
- WO 99111078 A
- WO 9857506 A
- WO 9819479 A
- DE 19621424 A1
- US 5901358 A